(19) Europäisches Patentamt
European Patent Office
Office européen des brevets

(11) **EP 2 944 836 B1**

(12) **EUROPÄISCHE PATENTSCHRIFT**

(45) Veröffentlichungstag und Bekanntmachung des Hinweises auf die Patenterteilung:
**04.10.2017 Patentblatt 2017/40**

(51) Int Cl.:
*F16C 33/36* (2006.01)    *F16C 19/34* (2006.01)
*F16C 19/30* (2006.01)    *F16C 19/50* (2006.01)

(21) Anmeldenummer: **14001719.5**

(22) Anmeldetag: **15.05.2014**

(54) **Wälzlager**

Roller bearing

Palier à roulement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.11.2015 Patentblatt 2015/47**

(73) Patentinhaber: **IMO Holding GmbH**
**91350 Gremsdorf (DE)**

(72) Erfinder: **Dennerlein, Johannes**
**91365 Weilersbach (DE)**

(74) Vertreter: **Küchler, Stefan**
**Patentanwalt**
**Färberstrasse 20**
**90402 Nürnberg (DE)**

(56) Entgegenhaltungen:
**EP-A2- 2 461 056        WO-A1-2010/040539**
**DE-A1-102007 049 982    DE-A1-102011 000 769**

**Beschreibung**

Die Erfindung richtet sich auf ein Wälzlager mit wenigstens zwei ringförmigen, zu einer Hauptdrehachse des Lagers konzentrischen, durch einen Spalt voneinander beabstandeten Anschlusselementen zum Anschluss an ein erstes Maschinen- oder Anlagenteil einerseits und an ein zweites Maschinen- oder Anlagenteil oder Chassis oder Fundament andererseits, wobei die beiden Anschlusselemente einander im Bereich des Spaltes in radialer Richtung bezogen auf die Hauptdrehachse des Wälzlagers dadurch überlappen, dass ein Anschlusselement an seiner dem Spalt zugewandten Fläche mit einer rundum laufenden Nut versehen ist, worin ein an dem anderen Anschlusselement angeformter Bund unter Ausbildung eines Spaltes eingreift, und wobei in einander radial überlappenden Bereichen des Spaltes an jedem der beiden Anschlußelemente jeweils wenigstens eine Laufbahn angeordnet ist, woran eine oder mehrere Reihen von Wälzkörpern abrollen, deren Oberflächen jeweils ausschließlich rotationssymmetrisch in Bezug auf eine einzige, ausgezeichnete Rotationssymmetrieachse des betreffenden Wälzkörpers sind, die radial bezüglich der Hauptdrehachse des Wälzlagers orientiert ist, und wobei die besagten Wälzkörper in Richtung ihrer Rotationssymmetrieachse eine Länge aufweisen sowie radial zu ihrer Rotationssymmetrieachse einen maximalen Radius, wobei ferner die besagten Wälzkörper eine doppelt konvex gewölbte Mantelfläche aufweisen mit einem Querwölbungsradius $r_q$ in einer Richtung tangential zu der Rotationssymmetrieachse z, der dem jeweiligen Abstand $r_R$ der Mantelfläche zur Rotationssymmetrieachse z in dem betreffenden Punkt der Mantelfläche des betreffenden Wälzkörpers entspricht und nur entlang einer Aquatorlinie Ä des betreffenden Wälzkörpers gleich dem maximalen Radius $r_{max}$ des Wälzkörpers ist, ansonsten jedoch kleiner:

$$r_q \leq r_{max}.$$

Viele technische Anlagen und Maschinen werden infolge des technischen Fortschritts beständig größer und leistungsfähiger, wobei dabei jeweils steigende Naturkräfte zu beherrschen sind. Windkraftanlagen sind ein gutes Beispiel dafür, weil deren Nennleistung beständig nach oben geschraubt wird. Damit einhergehend werden die Rotorblätter immer größer und länger konzipiert, was beständig steigende Anforderungen an die Blattlager zur Folge hat. Denn größere Rotorblätter sind länger und haben ein größeres Gewicht, fangen aber auch mehr Wind ein, wodurch die Windkräfte und damit insbesondere auch die Kippmomente im Blattlager steigen.

Um Wälzlager dementsprechend stabiler auszuführen, kann ein Konstrukteur insbesondere die Größe der Wälzkörper steigern. Dadurch nimmt allerdings auch der Ringquerschnitt eines solchen Wälzlagers zu, was in vielen Fällen unerwünscht ist. Bei Windkraftanlagen spielt andererseits auch das mit den steigenden Abmessungen des Ringquerschnitts rapide zunehmende Gewicht der Blattlager eine Rolle, da dieses das Hauptlager belastet und damit einem leichtgängigen Anlauf des Windrades entgegensteht.

Als gattungsgemäßes Dokument zeigt die WO 2010/040539 A1 eine Vorrichtung zur verdrehbaren Kopplung zweier koaxialer Anschlusselemente, von denen wenigstens eines als kreisförmiger Ring ausgebildet ist, und welche wenigstens je eine ringförmige Fläche aufweisen, die der betreffenden Fläche des jeweils anderenAnschlusselements zugewandt, von dieser jedoch durch einen Spalt beabstandet ist, so dass sie um eine gedachte, zur Ringebene etwa lotrechte Achse als Drehachse im Zentrum des ringförmigen Anschlusselements gegeneinander verdrehbar sind, wobei in dem Spalt zwischen den beiden Anschlusselementen eine als ein- oder mehrreihiges Wälzlager ausgebildete Drehlagerung angeordnet ist zur Aufnahme von Axial- und Radiallasten und Kippmomenten. Zwischen zwei in axialer Richtung der Drehachse gegeneinander versetzt angeordneten Wälzkörperreihen kann sich in dem Spalt ein mit einem Anschlusselement verbundener, rundum laufender Bund befinden, der in eine ebenfalls rundum laufende Nut an dem anderen Ansschlusselement in radialer Richtung überlappend eingreifen kann. Als Wälzkörper werden neben Kugeln und Zyliinderrollen auch tonnenförmige Wälzkörper vorgeschlagen. Die Konstruktionsweise dieses Lagertyps bedingt jedoch eine große radiale Querssschnittsabmessung des Lagers, weil sowohl Zylinderrollen als auch tonnenförmige Wälzkörper aufgrund ihrer Länge eine große Erstreckung der Ringe in radialer Richtung, bezogen auf die Drehachse des Lagers, erfordern.

Andererseits offenbart die DE 10 2007 049 982 A1 ein Wälzlager, insbesondere zur Lagerung eines Nutzfahrzeugrades, mit zwei in O-Anordnung zueinander gestellten Schrägkugellagern. Allerdings überlappen sich die beiden Anschlusselemente dieses Wälzlagers nicht in radialer Richtung, und zur Übertragung axialer Lasten stehen allenfalls die schräg gestellten Kugeln zur Verfügung. Für eine zusätzliche Abstützung in radialer Richtung sind zusätzlich zu den beiden schräg gestellten Kugellagerreihen ferner noch zwei dazwischen angeordnete Reihen von Wälzkörpern vorhanden, welche jeweils aus Kugeln mit zwei einander gegenüber liegenden Abflachungen bestehen. Die große Anzahl von Wälzkörperreihen bedingt dabei einen in axialer Richtung weit ausladenden Aufbau der Anschlusselemente, mit einem entsprechend großen Gewicht. Darüber hinaus leisten die abgeflachten Kugeln keinen Anteil bei der Übertragung von axialen Kräften, und schließlich müssen sie in einem Käfig geführt werden damit sich ihre jeweilige Drehachse nicht unkontrolliert verändert.

Aus den Nachteilen des beschriebenen Standes der Technik resultiert das die Erfindung initiierende Problem, ein gattungsgemäßes Wälzlager, das vorzugsweise auch als Blattlager für eine Windenergieanlage einsetzbar sein soll, derart weiterzubilden, dass trotz einer möglichst hohen Tragkraft des Wälzlagers der (Gesamt-) Querschnitt des Lagers so weit als möglich reduziert wird, um Gewicht zu sparen.

Die Lösung dieses Problems gelingt anhand einer Weiterbildung des gattungsgemäßen Lagers gemäß folgender Merkmale:

- die konvex gewölbten Mantelflächen der besagten Wälzkörper weisen einen Längswölbungsradius $r_d$ in einer Richtung parallel zu der Rotationssymmetrieachse z des betreffenden Wälzkörpers auf, der auf der gesamten Mantelfläche konstant und gleich oder kleiner als der maximale Radius $r_{max}$ des betreffenden Wälzkörper:

$$r_d \leq r_{max};$$

- die halbe Länge $l_R$ der besagten Wälzkörper ist kleiner als der maximale Radius $r_{max}$ des betreffenden Wälzkörpers:

$$\tfrac{1}{2}\, l_R < r_{max},$$

- der Bund geht an seinem Grund über eine stumpfwinklige Kante nach Art einer stumpfwinkligen Hohlkehle in einen anschließenden, dem Spalt zugewandten Oberflächenbereich des betreffenden Anschlusselements über.

Damit ist eine Anordnung geschaffen, die einerseits hohe Axialkräfte und Kippmomente aufnehmen kann, gleichzeitig aber sehr klein und leicht und damit platzsparend ist. Dies wird u.a. dadurch erreicht, dass die Länge l eines Wälzkörpers kürzer ist als dessen Durchmesser $D = 2 * r_{max}$: l < D. Dies wirkt sich erhöhend auf die axiale Tragkraft und gleichzeitig reduzierend auf die Rollreibung aus. Beide Effekte werden in bestimmten Anwendungen geschätzt, beispielsweise bei Lagerungen im Rahmen von Windkraftanlagen. Denn dort müssen einerseits hohe Wind- und Gewichtskräfte beherrscht werden, während gleichzeitig für den Anlauf und die Drehung nur ein möglichst geringer Widerstand zu überwinden sein soll, um Energie zu sparen. Andererseits erfahren Wälzkörper mit einer doppelt konvex gewölbten Mantelfläche eine Führung durch eine querschnittlich konkave Laufbahn, weil bereits bei einem geringfügigen Versatz eines Wälzkörpers quer zu der betreffenden Laufbahn sofort eine rückstellende Gegenkraft erzeugt wird, indem sich dabei der Tragwinkel ändert. Schließlich kann der benötigte Bauraum des Wälzlagers und damit auch dessen Gewicht reduziert werden, wenn die Länge l der Wälzkörper gemäß üblichen Rollen oder Kugeln reduziert ist. Indem einer der beiden Ringe als Nasenring ausgebildet wird, kann der Tragwinkel idealerweise auf 90° eingestellt werden, entsprechend einem Axiallager und/oder einem Lager zur bevorzugten Aufnahme von Kippmomenten. Derartige Lager können zwar jeweils nur Axialkräfte in einer einzigen Richtung aufnehmen, also beispielsweise Druckkräfte; durch Kombination zweier solcher Wälzkörperreihen, beispielsweise zu beiden Seiten eines an einem Nasenring rundum laufenden Bundes, insbesondere an der Ober- und Unterseite eines solchen Bundes, können Axialkräfte in beiden Axialrichtungen übertragen werden; gleichzeitig können dadurch die betreffenden Ringe in axialer Richtung gegeneinander vorgespannt werden, so dass sich eine besonders exakte Führung beider Ringe aneinander erzielen lässt. Indem die beiden Anschlusselemente einander dadurch radial überlappen, dass ein Anschlusselement an seiner dem Spalt zugewandten Fläche mit einer rundum laufenden Nut versehen ist, worin ein an dem anderen Anschlusselement angeformter Bund unter Ausbildung des Spaltes eingreift, wird dieser Bund von zwei Wälzkörperreihen umgriffen und gehalten, die ihrerseits von den Nutflanken des anderen Anschlusselements umgriffen werden. Indem ferner der Bund an seinem Grund über eine stumpfwinklige Kante in einen anschließenden, dem Spalt zugewandten Oberflächenbereich des betreffenden Anschlusselements übergeht, entsteht eine stumpfwinklige Hohlkehle, die in der Lage ist, einen Kantenbereich des betreffenden Wälzkörpers aufzunehmen und diesen dadurch optimal zu führen. Eine Maßgabe dabei ist, dass dassen Symmetrie- und Rotationsachsen dank einer präzisen Führung zusammenfallen sollen, mithin eine Art Präzessionsbewegung reduziert oder unterdrückt werden soll. Die Folge ist ein möglichst ruhiger, vibrationsarmer Lauf des Wälzlagers.

Es liegt im Rahmen der Erfindung, dass die besagten Wälzkörper einen Tragwinkel von mehr als 45° aufweien, vorzugsweise einen Tragwinkel von 60° oder mehr, insbesondere einen Tragwinkel von 75° oder mehr, im Idealfall einen Tragwinkel von 90°. Der ideale Tragwinkel ist auf eine rein axiale Belastung des betreffenden Lagers ausgerichtet. Andererseits ist der Tragwinkel im Gegensatz zu beispielsweise Rollenlagern bei der erfindungsgemäßen Wälzkörperanordnung nicht auf diese ideale Einstellung beschränkt; dank seiner zweifach gewölbten Mantelfläche kann ein solcher Wälzkörper auch'Radialkräfte übertragen. Solchenfalls ist dann der tatsächliche Tragwinkel nicht mehr exakt 90°, sondern etwas kleiner. Hierbei soll als Tragwinkel stets der Winkel betrachtet werden, den eine Linie von einem Berührungspunkt der Wälzkörpermantefläche mit einer Laufbahn zu dem Mittelpunkt des betreffenden Wälzkörpers gegenüber der von der Hauptdrehachse des Lagers lotrecht durchsetzten Grundebene einschließt.

Entsprechend ihrer bevorzugten Bestimmung übertragen die besagten Wälzkörper überwiegend oder ausschließlich Axialkräfte, also Kräfte in Richtung der Hauptdrehachse h des Wälzlagers, und/oder Kippmomente.

Die Erfindung lässt sich dahingehend weiterbilden, dass zwei Reihen von Wälkörpern mit doppelt konvex gewölbten Mantelflächen in Richtung der Hauptdrehachse h des Wälzlagers übereinander angeordnet sind, wobei die einander zugewandten Bereiche der Mantelflächen an Laufbahnen abrollen, welche an dem selben Anschlusselement angeordnet sind, während die einander abgewandten Bereiche der Mantelflächen an Laufbahnen abrollen, welche an dem anderen Anschlusselement angeordnet sind. Eine solche Anordnung bringt den Vorteil mit sich, dass solchenfalls für jede axiale Kraftrichtung (Druck- und Zugkräfte) eine eigene Wälzkörperreihe vorgesehen ist. Wenn die beiden vorwiegend axialen Wälzkörperreihen direkt übereinander angeordnet sind, können sie zwischen sich ein Teil eines Anschlusselements einspannen und werden dabei ihrerseits von dem anderen Anschlusselement axial umgriffen, stützen sich also an letzterem ab. Das Ergebnis ist ein universell wirkendes Lager, das alle axialen Kräfte unabhängig von deren Orientierung beherrschen kann.

Die radiale Erstreckung des Bundes sollte gleich oder größer sein als die radiale Erstreckung eines daran entlang rollenden Wälzkörpers, wobei die radialen Erstreckungsrichtungen jeweils auf die Hauptdrehachse des Wälzlagers bezogen sind. Demzufolge ragen die Wälzkörper nicht über den betreffenden Bund hinaus, sondern werden von diesem zwar vollständig abgestützt, beanspruchen aber keinen zusätzlichen Bauraum innerhalb des Lagers.

Damit einhergehend hat es sich bewährt, dass die Flanken des Bundes in radialer Richtung, bezogen auf die Hauptdrehachse des Wälzlagers, einem konkav gewölbten Verlauf folgen. Dabei sollte dieser Wölbungsradius $r_w$ größer sein als die halbe radiale Länge $l_{nq}$ des Nasenquerschnitts, gemessen in radialer Richtung zu der Lagerhauptachse, jedoch kleiner als dessen absolute radiale Gesamtlänge $l_{nq}$:

$$0{,}5\ l_{nq} < r_w < l_{nq}$$

Durch zwei stumpfwinkligen Übergangskanten oder Hohlkehlen zwischen je einer Flanke des Bundes und einem daran jeweils anschließenden, dem Spalt zugewandten Oberflächenbereich des betreffenden Anschlusselements, die in axialer Richtung des Wälzlagers übereinander liegen, können demnach zwei Wälzkörperreihen präzise übereinander geführt werden.

Auch das den Bund in einer rundum laufenden Nut aufnehmende Anschlusselement kann ebenfalls zwei stumpfwinklige Übergangskanten nach Art von stumpfwinkligen Hohlkehlen aufweisen, jeweils zwischen einer Flanke der Nut und dem Nutgrund des betreffenden Anschlusselements, welche in axialer Richtung des Wälzlagers übereinander liegen. Auch hier gilt, dass durch die stumpfwinklige Auskehlung eine optimale Führung der einzelnen Wälzkörper erreicht wird, mit der Maßgabe, Präzessionsbewegungen zu vermeiden.

Im Rahmen einer optimalen Auslegung sollte im Lagerquerschnitt der Öffnungswinkel $\alpha$ einer stumpfwinkligen Übergangskante oder einer stumpfwinkligen Hohlkehle größer sein als 90°, vorzugsweise größer als 105°, insbesondere größer als 120°, und/oder kleiner als 165°, vorzugsweise kleiner als 150°, insbesondere kleiner als 135°. dass im Lagerquerschnitt die Verbindungslinie zwischen den beiden, einer gemeinsamen Wälzkörperreihe zugeordneten, stumpfwinkligen Übergangskanten oder stumpfwinkligen Hohlkehlen beider Anschlusselemente im zusammengebauten Zustand durch den Mittelpunkt des betreffenden Wälzkörpers hindurch läuft. Damit ergibt sich eine maximal symmetrische Anordnung, was sich ebenfalls reduzierend auf die Erzeugung von Vibrationen auswirken soll.

Die Erfindung empfiehlt ferner, dass im Lagerquerschnitt die Verbindungslinie zwischen den beiden, einer gemeinsamen Wälzkörperreihe zugeordneten, stumpfwinkligen Übergangskanten oder stumpfwinkligen Hohlkehlen den Öffnungswinkel $\alpha$ einer stumpfwinkligen Übergangskante oder einer stumpfwinkligen Hohlkehle in zwei Winkel $\delta$, $\varepsilon$ teilt, von denen einer 90° beträgt, der andere dagegen nicht:

$$\alpha = \delta + \varepsilon, \text{ wobei } \delta = 90°, \varepsilon \neq 90°.$$

Dies resultiert daraus, dass im Bereich einer stumpfwinkligen Hohlkehle eines Anschlusselements bzw- im Bereich einer stumpfwinkligen Kante eines Wälzkörpers dessen jeweilige Mantelfläche tangential zu der betreffenden Radiallinie verläuft, so dass $\delta = 90°$; nei der jeweiligen Stirnseite ist dies dagegen nicht der Fall; letztere folgt eher einem sekantenartigen Verlauf, so dass $\varepsilon \neq 90°$ bzw. $\varepsilon < 90°$.

Es hat sich als günstig erwiesen, dass sich an den Mantelflächenbereich mit konstantem Längswölbungsradius $r_d = r_{max}$ jeweils eine Stirnfläche anschließt. ggf. nach einem Übergangsbereich. Während die Mantelfläche mit den Laufbahnen Kräfte und ggf. Kippmomente austauscht, können die Stirnflächen zu einer Führung des betreffenden Wälzkörpers beitragen, insbesondere dergestalt, dass die Rotationsachse der Wälzkörper ständig radial zu der Hauptdrehachse des betreffenden Lagers ausgerichtet bleibt und bei ihrer Bewegung keiner Präzession unterliegt, die allenfalls zu einer erhöhten Reibung führt und daher unerwünscht ist. Dabei dienen die Stirnflächen dank der doppelt konvex gewölbten Mantelfläche nur als eine Präzessionsbewegung begrenzendes Element, während die Mantelfläche auf der querschnittlich daran angepassten Laufbahn zusätzlich zu einer Axialführung auch in der Lage ist, radiale Kräfte zu übertragen.

dass ein oder beide Übergangsbereiche zwischen der Mantelfäche und einer oder beiden Stirnflächen in Längsrichtung des betreffenden Wälzkörpers kontinuierlich gewölbt sind, wobei der Übergangs-Längswölbungsradius $r_{d\ddot{u}}$ kleiner ist als der Längswölbungsradius $r_d$ im Bereich der Mantelfläche:

$$r_{d\ddot{u}} < r_d.$$

Es handelt sich hierbei um eine Art Abrundung zur Vermeidung von scharfen kanten, wodurch das Auftreten von Schäden vermieden werden soll.

Eine oder beide Stirnflächen können eben oder doppelt konvex oder doppelt konkav gewölbt sein. Durch eine derartige, leichte Wölbung einer Stirnseite eines Wälzkörpers wird dessen Berührungsfläche mit einem Anschlagelement auf einen linienförmigen Bereich reduziert, mit dem Ergebnis, dass die Reibung minimiert wird und damit auch der Verschleiß. Dabei kommt es weniger auf den Verschleiß der Wälzkörper an, weil die betreffenden Stellen ohnehin keine nutzbringende, kraftübertragende Wirkung entfalten; vielmehr ist auf das Schmiermittel zu achten, weil dieses durch Spanabrieb schnell verunreinigt werden kann und dann nur noch einen verminderten Schutz gegenüber vorzeitiger Alterung bietet oder gar im Gegenteil einen erhöhten Verschleiß zur Folge hat.

dass der radiale Wölbungsradius $r_r$ einer oder beider Stirnflächen betragsmäßig oder absolut größer ist als der Längswölbungsradius $r_{d\ddot{u}}$ in dem betreffenden Übergangsbereich zwischen der Mantelfäche und der betreffenden Stirnfläche:

$$|r_r| > r_{d\ddot{u}},$$

oder

$$r_r > r_{d\ddot{u}}.$$

Mit anderen Worten, die Stirnflächen sind erheblich weniger gewölbt als die Mantelfläche. Dementsprechend könnte man auch formulieren: $|r_r| > 5 * r_{d\ddot{u}}$, oder $r_r > 5 * r_{d\ddot{u}}$, oder $|r_r| > 10 * r_{d\ddot{u}}$, oder $r_r > 10 * r_{d\ddot{u}}$, oder $|r_r| > 20 * r_{d\ddot{u}}$, oder $r_r > 20 * r_{d\ddot{u}}$, oder $|r_r| > 50 * r_{d\ddot{u}}$, oder $r_r > 50 * r_{d\ddot{u}}$, oder $|r_r| > 100 * r_{d\ddot{u}}$, oder $r_r > 100 * r_{d\ddot{u}}$.

Der radiale Wölbungsradius $r_r$ einer oder beider Stirnflächen sollte auch größer sein als der Längswölbungsradius $r_d$ im Bereich der Mantelfäche des betreffenden Wälzkörpers:

$$r_r > r_d.$$

Denn die Aufgabe der Stirnflächen ist allenfalls die einer Führung, was im Allgemeinen flachere Stirnflächen besser leisten können als stark gewölbte Flachen.

Erfindungsgemäß ist weiterhin vorgesehen, dass an einem oder beiden Anschlusselementen eine Führungsfläche vorgesehen ist, um die Rotationssymmetrieachsen der Wälzkörper stets radial in Bezug auf die Hauptdrehachse des Wälzlagers auszurichten. Diese Führungsflächen sollen dazu ggf. mit den Stirnflächen der Wälzkörper in Kontakt treten und die Wälzkörper bei Bedarf derart zurückzusteuern, dass die Rotationsachse mit ihrer Symmetrieachse zusammenfällt.

Um ihren Zweck optimal erfüllen zu können, sollten die Führungsflächen einander zugewandt sein. Zwischen je zwei solchen, einander zugewandten Führungsflächen findet dann jeweils eine Reihe von Wälzkörpern Platz. Der lichte Abstand zwischen zwei solchen, einander zugewandten Führungsflächen sollte allenfalls geringfügig größer sein als die Längserstreckung der betreffenden Wälzkörper entlang ihrer Symmetrieachse, so dass diese sich reibungsarm zwischen den Führungsflächen abwälzen können, ohne allzu großen Spielraum zu erhalten und eventuell in Schieflage zu geraten.

Weiterhin können die Führungsflächen zumindest bereichsweise eben sein. Eine solche Gestalt bietet sich gerade in Kombination mit leicht gewölbten Stirnflächen der Wälzkörper an, weil dann die Effekte der Reibungsminimierung und Führungsoptimierung am besten miteinander in einklang gebracht werden können.

Eine optimale Ausrichtung der Wälzkörper kann weiter unterstützt werden durch einen in dem Spalt angeordneten Käfig, um die einzelnen Wälzkörper in Umfangsrichtung des Spaltes auf etwa konstanten Abständen zu halten.

Ddurch wird eine Kollision zwischen benachbarten Wälzkörpern mit daraus folgender, erhöhter Reibung vermieden. Außerdem wird eine gleichmäßige Verteilung der Tragfähigkeit des Lagers durch gleichmäßig verteilte Wälzkörper unterstützt.

Um eine möglichst platzsparende Anordnung zu finden, ist weiterhin vorgesehen, dass die besagten Wälzkörper an keiner Stelle gelagert sind, sondern innerhalb des Spaltes frei umlaufen und dort ihre Führung durch die oben angesprochenen Führungsflächen sowie ggf. einen Käfig erhalten.

Die Erfindung erfährt eine weitere Optimierung dadurch, dass zur Übertragung von Radialkräften, also von Kräften radial zur Hauptdrehachse h des Wälzlagers, ein zusätzliches Radiallager vorgesehen ist, vorzugsweise wenigstens eine Reihe von zusätzlichen Wälzkörpern, welche zwischen einander in axialer Richtung überlappenden Laufbahnen abrollen. Zwar sind die weiter oben genannten, erfindungsgemäßen Wälzkörper dank ihrer doppelt gewölbten Mantelfläche auch in der Lage, Radialkräfte aufzunehmen und zu übertragen; eine solche Radialabstützung ist jedoch vergleichsweise "weich" und mit einer merklichen Relativverlagerung der beiden Anschlusselemente verbunden; die deshalb vorgeschlagene, zusätzliche Wälzkörperreihe zwischen in axialer Richtung einander überlappenden Laufbahnen bilden demgegenüber eine eher "harte" Radialabstützung, d.h., ohne größere interne Verformungen innerhalb des Lagers.

Die Erfindung erfährt eine nutzbringende Weiterbildung dadurch, dass die Wälzkörper der Radiallagerreihe rollen- oder nadelförmig ausgebildet sind. Diese Art von Wälzkörpern können bei vergleichsweise kleinem Durchmesser hohe Kräfte übertragen, so dass dadurch das Bauvolumen eines erfindungsgemäßen Lagers nicht erhöht wird.

Zur Befestigung eines Anschlusselements an einem Maschinen- oder Anlagenteil, Fundament, Chassis, Fahrzeugteil od. dgl. verfügt dieses über jeweils kranzförmig verteilt angeordnete Befestigungsmittel, insbesondere axiale Befestigungsbohrungen. Es kann sich hierbi um Durchgangsbohrungen mit zu der Hauptdrehachse parallen Längsachsen handeln oder um Sacklochbohrungen mit Innengewinde zum Eindrehen von Maschinenschrauben oder Gewindebolzen. Dadurch kann eine von diesen Befestigungsbohrungen lotrecht durchsetzte Anschlussfläche stumpf und reibschlüssig gegen eine Anschlussfläche des betreffenden Maschinen- oder Anlagenteils, Fundaments, Chassis, Fahrzeugteils etc. gepresst werden.

Dank der vorliegenden Erfindung lässt sich der radiale Abstand zwischen den beiden Reihen von axialen Befestigungsbohrungen minimieren, beispielsweise derart, dass er gleich oder kleiner ist als der 2.5-fache maximale Durchmesser $d_{max}$ eines Wälzkörpers, oder dass er gleich oder kleiner ist als der doppelte maximale Durchmesser $d_{max}$ eines Wälzkörpers, insbesondere derart, dass er gleich oder kleiner ist als der 1,5-fache maximale Durchmesser $d_{max}$ eines Wälzkörpers. Damit erhält man mehrere Vorteile: Zum einen reduziert sich das benötigte Bauvolumen - das Lager wird kleiner und behindert benachbarte Konstruktionen weniger. Darüber hinaus wird damit auch Material eingespart, was die Materialkosten minimiert und auch das Gewicht. Schließlich lässt sich durch näher aneinander gedrückte Befestigungsmittel der axiale Kraftfluss innerhalb des Lagers verbessern, derart, dass dieser weniger geneigt, sondern deutlich gerader durch das Lager hindurch geleitet wird, was sich förderlich auf die Steifheit gegenüber axialen Belastungen auswirkt.

Im Rahmen einer besonderen Ausführungsform können insgesamt drei Anschlusselemente vorgesehen sein, nämlich ein radial inneres mit dem kleinsten Radius, ein radial äußeres mit dem größten Radius und dazwischen ein radial mittleres mit einem mittleren Radius. Wenn dabei das radial innere und das radial äußere an einer gemeinsamen Tragkonstruktion festgeschraubt wird, das radial mittlere dagegen an einer demgegenüber zu verdrehenden Konstruktion, so kann dadurch ie Steifheit gegenüber axialen Kraftbelastungen weiter gesteigert werden.

Bei der zuletzt genannten Ausführungsform sollten in dem Spalt zwischen dem inneren und dem mittleren Anschlusselement ein oder vorzugsweise zwei Reihen von Wälzkörpern mit doppelt konvex gewölbter Mantelfläche entlang von dortigen Laufbahnen in einander in radialer Richtung überlappenden Bereichen der betreffenden Anschlusselemente angeordnet sein, und/oder zwischen dem mittleren und dem äußeren Anschlusselement ein oder vorzugsweise zwei Reihen von Wälzkörpern mit doppelt konvex gewölbter Mantelfläche entlang von dortigen Laufbahnen in einander in radialer Richtung überlappenden Bereichen der betreffenden Anschlusselemente angeordnet sein. Die besten Ergebnisse lassen sich erzielen, wenn in beiden Spaltbereichen jeweils Wälzkörper mit doppelt konvex gewölbter mantelfläche und demgegenüber weitgehend ebenen Stirnflächen ihren Dienst verrichten, insbesondere jeweils zwei Reihen solcher Wälzkörper, welche gegeneinander vorgespannt sein können, um Axialkräfte in beiden richtungen übertragen zu können. Bei letzterer Ausführungsform gäbe es dann mindestens vier Reihen von Wälzkörpern, nämlich jeweils zwei pro Spaltbereich.

Schließlich entspricht es der Lehre der Erfindung, dass das innere und das äußere der drei Anschlusselemente im Bereich einer Stirnseite des mittleren Anschlusselements aneinander grenzen oder miteinander verbunden sind. Diese Maßnahme dient dem Zweck, eine klemmungsfreie Montage zu ermöglichen, damit jedenfalls der radiale Abstand zwischen dem innersten und dem äußersten Anschlusselement zumindest während der Montage in Umfangsrichtung absolut konstant gehalten wird und also jegliche Tendenz eines Verklemmens vermieden ist.

Weitere Merkmale, Einzelheiten, Vorteile und Wirkungen auf der Basis der Erfindung ergeben sich aus der folgenden Beschreibung einer bevorzugten Ausführungsform der Erfindung sowie anhand der Zeichnung. Hierbei zeigt:

Fig. 1    einen Schnitt durch ein erfindungsgemäßes Wälzlager, perspektivisch dargestellt;

Fig. 2    das Wälzlager aus Fig. 1 in einer vereinfachten Schnittdarstellung;

Fig. 3    einen Schnitt durch die Fig. 2 entlang der Linie III - III; sowie

Fig. 4a    einen kugelförmigen Wälzkörper aus dem Stand der Technik, in einer Ansicht auf dessen Mantelfläche;

Fig. 4b    einen tonnenförmigen Wälzkörper aus dem Stand der Technik, in einer Ansicht auf dessen Mantelfläche;

Fig. 4c    einen der Wälzkörper aus dem Lager nach den Fig. 1 bis 3 in einer Ansicht auf dessen Mantelfläche, in Relation gesetzt zum Stand der Technik gemäß den Fig. 4a und 4b.

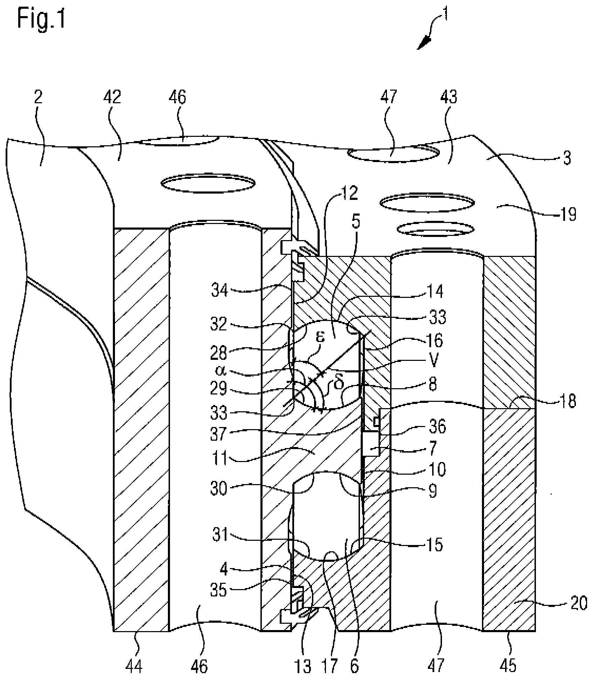

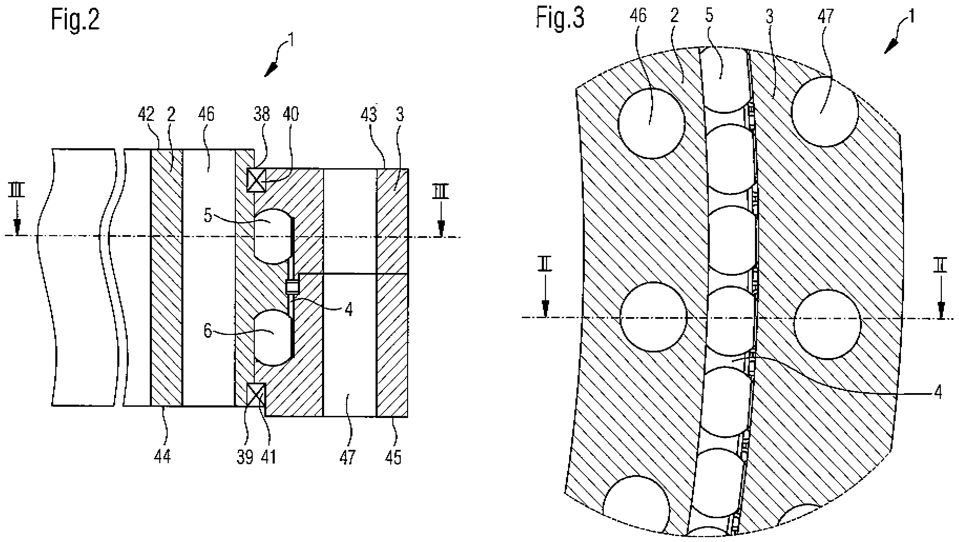

Bei dem in den Fig. 1 bis 3 dargestellten Wälzlager 1 handelt es sich um ein mittenfreies Großwälzlager zur Drehkopplung großer und schwerer Maschine- oder Anlagenteile. Ein beispielhafter Anwendungsfall sind Windkraftanlagen, wo solche Wälzlager 1 als Rotor- oder Hauptlager eingesetzt werden können oder - insbesondere mit einer rundumlaufenden Verzahnung, welche an einem der beiden Ringe vorgesehen sein kann, um eine aktive Relativverdrehung zu ermöglichen - als Blattlager zur variablen Anstellung eines Rotorblattes gegenüber dem anströmenden Wind je nach dessen Windstärke, oder als Maschinenhauslager zur Ausrichtung der Rotorachse parallel zur Windrichtung, um eine optimale Anströmung des Windrades sicherzustellen. Darüber hinaus ist eine Ausrüstung eines erfindungsgemäßen Wälzlagers 1 mit einer rundum laufenden Verzahnung zwecks aktiver Verdrehbarkeit im Rahmen der Erfindung fürdie vielfältigsten Anwendungsfälle denkbar, beispielsweise auch im Rahmen von Drehkränen, Karrussells, etc.
Im dargestellten Ausführungbeispiel verfügt das Wälzlager 1 über zwei relativ zueinander verdrehbare Anschlusselemente 2, 3 von kreisringförmiger, ebener Gestalt. Diese beiden Anschlusselemente 2, 3 sind konzentrisch zueinander angeordnet, d.h. derart, dass ihre jeweiligen Symmetrieachsen zusammenfallen, welche auch gleichzeitig die Drehachse des Wälzlagers 1 bilden. Aufgrund dieser Anordnung sind auch die Ringebenen dieser beiden Anschlusselemente 2, 3 parallel zueinander und werden von der Drehachse des Wälzlagers 1 lotrecht durchsetzt. Im weiteren Verlauf soll diese Drehachse als "Höhen"-Achse bezeichnet werden und eine mittlere Ebene jedes ringförmigen Anschlusselements 2, 3 als dessen "Grund"-Ebene. Die beiden Anschlusselemente 2, 3 sind nicht nur konzentrisch zueinander, sondern haben jeweils auch etwa gleiche Höhenerstreckungen $H_1$, $H_2$, und ihre beiden Grundebenen befinden sich auch auf etwa derselben Höhe, d.h., die Schwerpunkte beider Anschlusselemente 2, 3 fallen nahezu punktförmig zusammen und sind allenfalls um eine minimale Höhendifferenz $\Delta H$ voneinander beabstandet, so dass gilt:

$$\Delta H \leq (H_1 + H_2)/5,$$

insbesondere:

$$\Delta H \leq (H_1 + H_2)/10.$$

Dies ist deshalb möglich, weil ein Anschlusselement, nämlich das innere Anschlusselement 2, einen kleineren mittleren Radius aufweist als das andere, äußere Anschlusselement 3:

$$R_1 < R_2,$$

und also innerhalb jenem Platz findet.
Zwischen den beiden, solchermaßen radial ineinander angeordneten Anschlusselementen 2, 3 verbleibt ein Spalt 4, welcher die beiden Anschlusselemente 2, 3 vollständig voneinander trennt und daher eine Relativverdrehung zwischen denselben ermöglicht.
Um trotz dieses Spaltes 4 die Koaxialität zwischen den beiden Symmetrieachsen beider Anschlusselemente 2, 3 zu gewährleisten, sind zwischen jenen Wälzkörper 5-7 vorgesehen, im vorliegenden Beispiel drei Reihen von Wälzkörper 5-7. Davon dienen zwei Reihen von Wälzkörpern 5, 6 der Parallelausrichtung der Ebenen beider Anschlusselementen 2, 3 sowie ggf. der Einstellung eines konstanten Höhenversatzes $\Delta H$. Die dritte Reihe von Wälzkörpern 7 sorgt für die koaxiale Ausrichtung der Symmetrieachsen beider Anschlusselemente 2, 3 für und eine exakte Einhaltung einer solchen Ausrichtung.
Bei allen Wälzkörpern 5-7 handelt es sich um Körper, welche ausschließlich zu jeweils einer einzigen, wohldefinierten Symmetrieachse des betreffenden Wälzkörpers 5-7 rotationssymmetrisch sind, und welche aus diesem Grund auch als Rollen bezeichnet werden könnten. Allerdings haben die Wälzkörper 5-7 unterschiedlich ausgerichtete Symmetrieachsen: Während die Symmetrieachsen zweier Reihen von Wälzkörpern 5, 6 radial bezüglich der Hauptdrehachse des Lagers 1 verlaufen, verlaufen die Symmetrieachsen der dritten Reihe von Wälzkörpern 7 parallel zu der Hauptdrehachse des Lagers 1.

Die Wälzkörper 5-7 sind zu diesem Zweck jedoch nicht gelagert, sondern geführt, insbesondere durch die Gestalt der Oberflächen innerhalb des Spaltes 4.

Solche Führungsoberflächen werden beispielsweise gebildet durch zwei Flanken 8, 9 und eine Stirnseite 10 eines an einem Anschlusselement 2, 3 im Bereich des Spaltes 4 angeformten, rundumlaufenden Bundes 11, sowie durch oberhalb und unterhalb an diesen Bund 11 anschließende Oberflächen 12, 13 des betreffenden Anschlusselementes 2, 3 einerseits, sowie andererseits duch zwei Flanken 14, 15 und den Grund 16 einer in das andere Anschlusselement 3, 2 im Bereich des Spaltes 4 eingeformten, rundumlaufenden Nut 17. Das den Bund 11 aufweisende Anschlusselement 2, 3 soll im Folgenden entsprechend der üblichen Praxis als Nasenring", das andere, die Nut 17 aufweisende Anschlusselement 3, 2 dagegen als "C-Ring" bezeichnet werden.

Da der Bund 11 des Nasenrings 2, 3 in die Nut 17 des C-Rings 3, 2 eingreift, so dass sich diese Teile 11, 17 in radialer Richtung überlappen, lässt sich das Lager 1 nur zusammenbauen, wenn der C-Ring 3, 2 im Bereich seiner Nut 17 entlang einer Trennebene 18 unterteilt ist in einen oberen Ring 19 und in einen unteren Ring 20. Bei der Montage des Lagers 1 können diese beiden Ringe 19, 20 von oben einerseits und von unten andererseits über den Nasenring 2, 3 gestülpt werden und schließlich miteinander verbunden werden, beispielsweise mittels in der Zeichnung nicht dargestellter Schrauben.

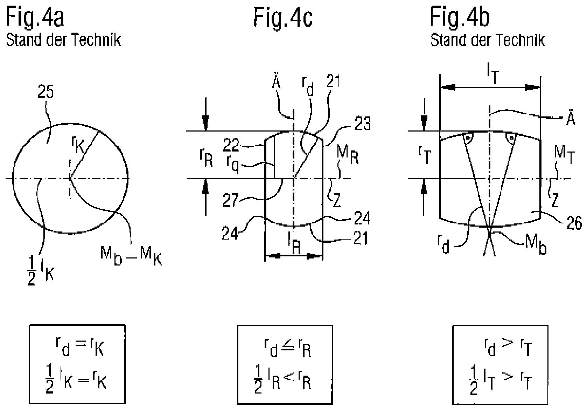

Während die der koaxialen Einstellung beider Anschlusselemente 2, 3 dienende Reihe von Wälzkörpern 7 als normale Rollen mit beispielsweise zylindrischer Gestalt ausgebildet sein können, weisen die beiden ürbigen Reihen von Wälzkörpern 5, 6 eine besondere Gestaltung auf, die insbesondere auch in Fig. 4c ausführlich dargestellt ist:

Man erkennt einen Körper mit einer Mantelfläche 21 und zwei endseitigen Stirnflächen 22, 23. Zwischen jeder Stirnfläche 22, 23 und der Mantelfläche 21 gibt es jeweils eine ringförmig rundum laufende Kante 24. Solche Kanten 24 fehlen bei konventionellen Wälzlager-Kugeln 25, wie sie in Fig. 4 links zu sehen sind.

Ähnlich wie Rollen oder die in Fig. 4b dargestellten Wälzlager-Tonnen 26 haben die erfindungsgemäßen Wälzkörper 5, 6 jeweils eine wohldefinierte Rotations-Symmetrieachse $M_R$, 27.

Andererseits kann man sich einen Wälzkörper 5, 6 als durch Abschneiden von seitlichen Kuppen eines kantenlosen Grundkörpers entlang von zueinander parallelen Schnittflächen entstanden denken, welche Schnittflächen nachher die Stirnflächen 22, 23 der Wälzkörper 5, 6 bilden. Zueinander diametrale Bereiche der Mantelfläche 21 bilden jeweils Abschnitte eines gemeinsamen, dem Wälzkörper 5, 6 umbeschriebenen Großkreises. Deshalb ist die Krümmung der Mantelfläche 21 in Längsrichtung ihrer Rotations-Symmetrieachse 27 derart bemessen, dass die beiden Krümmungsradien $r_{d,1} = r_{d,2} = r_d$ gleich groß sind und einander diametral gegenüber liegender Bereiche der Mantelfläche 21 einander zu einem Wert ergänzen, welcher dem maximalen Durchmesser $d_{max}$ des Wälzkörpers 5, 6 entspricht oder kleiner ist als jener:

$$r_d + r_d \leq d_{max}.$$

Die Länge $l_R$ eines Wälzkörpers 5, 6 ist dagegen kürzer als dieser maximale Durchmessser $d_{max}$ des Wälz-körpers 5, 6:

$$l_R < d_{max}.$$

Zum Einbau derartiger Wälzkörper 5, 6 sind die Oberflächen des Spaltes 4 speziell gestaltet, insbesondere im Bereich des nasenförmigen Bundes 11 und der diesen aufnehmenden Nut 17.

Die Wälzkörper 5, 6 laufen einerseits entlang von Laufbahnen 28, 29 des Bundes 11 an dem Nasenring 2,3 an, welche den Flanken 8, 9 des nasenförmigen Bundes 11 ensprechen, sowie andererseits an Laufbahnen 30, 31 des C-Rings 3,2, welche den Flanken 14, 15 der nutförmigen Vertiefung 17 entsprechen.

Diese Laufbahnen 28, 29, 30, 31 haben jeweils ähnliche oder gleiche Querschnittsgeometrien. Es handelt sich jeweils um eine konkave Wölbung mit einem konstanten Laufbahn-Wölbungsradius $r_l = r_d$.

Weitere Besonderheiten sind, dass jede Laufbahn 28, 29, 30, 31 an ihren beiden Umfangsrändern jeweils eine Kante 32, 33 mit unterschiedlichen Querschnittswinkeln $\beta$, $\gamma$ ausbildet. Davon ist eine Kante 32 querschnittlich spitzwinklig, d.h., für den dortigen Querschnittswinkel $\beta$, welcher also die betreffende Laufbahn 28-31 an der betreffenden Kante 32 mit dem daran anschließenden Oberflächenbereich 10, 34, 35 einschließt, gilt:

$$0° < \beta < 90°.$$

Die jeweils andere Kante 33 ist eine Hohlkehle; der dortige Kantenwinkel $\gamma$ ist liegt also zwischen 180° und 270° und ergänzt sich mit dem Öffnungswinkel $\alpha$ der Hohlkehle zu 360°:

$$180° < \gamma < 270°;$$

$$\alpha + \gamma = 360°.$$

Ferner gilt bei einer bevorzugten Ausführungsform des Wälzlagers 1 - wobei $r_d = r_R$ - für den spitzen Querschnittswinkel $\beta$ an der ersten Kante 32:

$$\beta = 90° - \varepsilon,$$

bzw.

$$\beta + \varepsilon = 90°,$$

wobei $\varepsilon$ derjenige Winkel ist, welchen in einer Querschnittsdarstellung die Verbindungslinie V zweier einander diametral gegenüber liegenden Hohlkehlen 33 für die Laufbahnen der selben Wälzkörper 5, 6 dort mit der jeweiligen Stirnfläche 22, 23 des Wälzkörpers 5, 6 einschliesst. $\beta$ und $\varepsilon$ sind in diesem bevorzugten Fall also Komplementärwinkel, welche sich zu 90° ergänzen.

Bevorzugt ist der Grund 16 der rundumlaufenden Nut 17 eine konkave Hohlzylindermantelfläche, worin allenfalls eine Laufbahn 36 für dortige Wälzkörper 7 eingearbeitet sein kann.

In ähnlicher Form ist die freie Stirnseite 10 des Bundes 11 eine konvexe Zylindermantelfläche, worin allenfalls eine Laufbahn 37 für dortige Wälzkörper 7 eingearbeitet sein kann. Auch die an den Bund 11 angrenzennden Oberflächenbereiche 12, 13 haben eine konvexe, zylindermantelförmige Gestalt.

Da jedoch bei einem erfindungsgemäßemn Großwälzlager 1 der Radius dieser (Hohl-) Zylindermantelflächen 10, 16 verhältnismäßig groß ist, kann die betreffende Wölbung gegenüber ebenen Stirnflächen 22, 23 daran geführter Wälzkörper 5, 6 im Allgemeinen vernachlässigt werden. Dies gilt in verstärktem Maße für konvexe Führungsflächen 12, 13, während es im Bereich des konkaven Grundes 16 der Nut 17 unter Umständen sinnvoll sein kann, die daran geführte Stirnfläche 23 eines Wälzkörpers 5, 6 mit einer etwa entsprechenden, allerdings konvexen Wölbung zu versehen.

Die Wälzkörper 5, 6 können auf etwa äquidistanten Positionen gehalten werden durch Abstandskörper oder Käfigelemente, welche innerhalb des Spaltes 4 Platz finden.

Vorzugsweise ist der Spalt 4 an seinen beiden Mündungsbereichen 38, 39 durch wenigstens je eine Dichtung 40, 41 abgedichtet, so dass innerhalb des Spaltes 4 ein Schmiermittel, vorzugsweise ein Schmierfett, eingefüllt werden kann.

Wie die Fig. 1 weiter erkennen lässt, weist jedes Anschlusselement 2, 3 zumindest eine ebene Stirnfläche 42-45 auf. Bevorzugt ist an der Oberseite des Lagers 1 wie auch an dessen Unterseite jeweils eine Stirnfläche 42, 44 gegenüber der dort jeweils benachbarten Stirnfläche 43, 44 des jeweils anderen Anschlusselements 3,2 erhaben ausgebildet und dient als ebene Anlagefläche für ein anzuschließendes Maschinen- oder Anlagenteil, etc.

Jede derartige ebene Anlage- bzw. Anschlussfläche 42, 44 ist von kranzförmig über den Umfang des betreffenden Anschlusselements 2, 3 verteilt angeordneten Befestigungsbohrungen 46, 47 durchsetzt, welche zum Durchstecken und/oder Einschrauben von in der Zeichnung nicht wiedergegebenen Befestigungsschrauben dienen.

Die Längsachsen dieser Befestigungsbohrungen 46, 47 eines Anschlusselements 2, 3 haben allesamt gleiche Abstände $R_I$, $R_A$ von der zentralen Drehachse des Lagers 1. Jedoch sind die Abstände $R_A$ des äußeren Anschlusselements 3 größer als die Abstände $R_I$ des inneren Anschlusselements 2. Der Radius $r_j$ der inneren Befestigungsbohrungen 46 kann kleiner, gleich oder größer sein als der Radius $r_a$ der äußeren Befestigungsbohrungen 47.

Aufgrund der erfindungsgemäßen Gestalt der Wälzkörper 5, 6 lassen sich die Abstände $R_I$, $R_A$ nahezu gleich groß wählen. Bevorzugt gilt:

EP 2 944 836 B1

$$\Delta R = R_A - R_I \leq r_a + r_i + 1{,}5 * r_{max}$$

Mit anderen Worten, trotz eines großen Wälzkörperradius $r_{max}$ und demzufolge einer hohen Tragkraft des Lagers 1 können die Querschnitte bzw. die radialen Erstreckungen der ringförmigen Anschlusselemente 2, 3 sehr klein gewählt werden, so dass sich Material und Gewicht und damit Kosten sowie Bauraum einsparen lassen.

### Bezugszeichenliste

| | | | |
|---|---|---|---|
| 1 | Wälzlager | 26 | Tonne |
| 2 | Anschlusselement | 27 | Rotations-Symmetrieachse |
| 3 | Anschlusselement | 28 | Laufbahn |
| 4 | Spalt | 29 | Laufbahn |
| 5 | Wälzkörper | 30 | Laufbahn |
| 6 | Wälzkörper | 31 | Laufbahn |
| 7 | Wälzkörper | 32 | Kante |
| 8 | Flanke | 33 | Kante |
| 9 | Flanke | 34 | Oberfläche |
| 10 | Stirnseite | 35 | Oberfläche |
| 11 | Bund | 36 | Laufbahn |
| 12 | Oberfläche | 37 | Laufbahn |
| 13 | Oberfläche | 38 | Mündungsbereich |
| 14 | Flanke | 39 | Mündungsbereich |
| 15 | Flanke | 40 | Dichtung |
| 16 | Grund | 41 | Dichtung |
| 17 | Nut | 42 | Stirnfläche |
| 18 | Trennebene | 43 | Stirnfläche |
| 19 | Ring | 44 | Stirnfläche |
| 20 | Ring | 45 | Stirnfläche |
| 21 | Mantelfläche | 46 | Befestigungsbohrung |
| 22 | Stirnfläche | 47 | Befestigungsbohrung |
| 23 | Stirnfläche | | |
| 24 | Kante | | |
| 25 | Kugel | | |

## Patentansprüche

1. Wälzlager (1) mit wenigstens zwei ringförmigen, zu einer Hauptdrehachse (h) des Lagers (1) konzentrischen, durch einen Spalt (4) voneinander beabstandeten Anschlusselementen (2,3) zum Anschluss an ein erstes Maschinen- oder Anlagenteil einerseits und an ein zweites Maschinen- oder Anlagenteil oder Chassis oder Fundament andererseits, wobei die beiden Anschlusselemente (2,3) einander im Bereich des Spaltes (4) in radialer Richtung bezogen auf die Hauptdrehachse (h) des Wälzlagers (1) dadurch radial überlappen, dass ein Anschlusselement (2,3) an seiner dem Spalt (4) zugewandten Fläche mit einer rundum laufenden Nut (17) versehen ist, worin ein an dem anderen Anschlusselement (3,2) angeformter Bund (11) unter Ausbildung des Spaltes (4) eingreift, und wobei in einander radial überlappenden Bereichen des Spaltes (4) an jedem der beiden Anschlußelemente (2,3) jeweils wenigstens eine Laufbahn (28-31) angeordnet ist, woran eine oder mehrere Reihen von Wälzkörpern (5,6) abrollen,

    a) deren Oberflächen jeweils ausschließlich rotationssymmetrisch in Bezug auf eine einzige, ausgezeichnete Rotationssymmetrieachse (z) des betreffenden Wälzkörpers (5,6) sind, die radial bezüglich der Hauptdrehachse (h) des Wälzlagers (1) orientiert ist,

   und wobei die besagten Wälzkörpern (5,6)

    b) in Richtung ihrer Rotationssymmetrieachse (z) eine Länge (l) aufweisen, sowie
    c) radial zu ihrer Rotationssymmetrieachse (z) einen maximalen Radius ($r_{max}$), sowie ferner

d) eine doppelt konvex gewölbte Mantelfläche (21) mit einem Querwölbungsradius ($r_q$) in einer Richtung tangential zu der Rotationssymmetrieachse (z), der dem jeweiligen Abstand ($r_R$) der Mantelfläche (21) zur Rotationssymmetrieachse (z) in dem betreffenden Punkt der Mantelfläche (21) des betreffenden Wälzkörpers (5,6) entspricht und allenfalls entlang einer Äquatorlinie (Ä) des betreffenden Wälzkörpers (5,6) gleich dem maximalen Radius ($r_{max}$) des Wälzkörpers (5,6) ist, ansonsten jedoch kleiner:

$$r_q < r_{max},$$

**dadurch gekennzeichnet, dass**

e) die konvex gewölbte Mantelfläche (21) der besagten Wälzkörper (5,6) einen Längswölbungsradius ($r_d$) in einer Richtung parallel zu der Rotationssymmetrieachse (z) des betreffenden Wälzkörpers (5,6) aufweist, der auf der gesamten Mantelfläche (21) konstant ist und gleich oder kleiner ist als der maximale Radius ($r_{max}$) des Wälzkörpers (5,6):

$$r_d < r_{max},$$

f) wobei die halbe Länge (l) des Wälzkörpers (5,6) kleiner ist als der maximale Radius ($r_{max}$) des Wälzkörpers (5,6):

$$\tfrac{1}{2}\, l_R < r_{max},$$

g) und wobei der Bund (11) an seinem Grund über eine stumpfwinklige Kante nach Art einer stumpfwinkligen Hohlkehle in einen anschließenden, dem Spalt (4) zugewandten Oberflächenbereich (12,13) des betreffenden Anschlusselements (2.3) übergeht.

2. Wälzlager (1) nach Anspruch 1, **dadurch gekennzeichnet, dass** dass die besagten Wälzkörper (5,6) überwiegend oder ausschließlich Axialkräfte, also Kräfte in Richtung der Hauptdrehachse (h) des Wälzlagers (1), und/oder Kippmomente übertragen, und/oder dass die besagten Wälzkörper (5,6) einen Tragwinkel von mehr als 45° aufweisen, vorzugsweise einen Tragwinkel von 60° oder mehr, insbesondere einen Tragwinkel von 75° oder mehr, im Idealfall einen Tragwinkel von 90°.

3. Wälzlager (1) nach einem der Ansprüche 1 oder 2, **dadurch gekennzeichnet, dass** zwei Reihen von Wälzkörpern (5,6) mit doppelt konvex gewölbten Mantelflächen (21) in Richtung der Hauptdrehachse (h) des Wälzlagers (1) übereinander angeordnet sind, wobei die einander zugewandten Bereiche der Mantelflächen (21) an Laufbahnen (28-31) abrollen, welche an dem selben Anschlusselement (2,3) angeordnet sind, während die einander abgewandten Bereiche der Mantelflächen (21) an Laufbahnen (28-31) abrollen, welche an dem anderen Anschlusselement (3,2) angeordnet sind.

4. Wälzlager (1) nach einem der vorhergehenden Ansprüche, **dadurch gekennzeichnet, dass** die radiale Erstreckung des Bundes (11) gleich oder größer ist als die radiale Erstreckung eines besagten, daran entlang rollenden Wälzkörpers (5,6), wobei die radiale Erstreckung jeweils auf die Hauptdrehachse (h) des Wälzlagers (1) bezogen ist.

5. Wälzlager (1) nach einem der Ansprüche 4, **dadurch gekennzeichnet, dass** die Flanken (8,9) des Bundes (11) in radialer Richtung, bezogen auf die Hauptdrehachse (h) des Wälzlagers (1), einem konkav gewölbten Verlauf folgen.

6. Wälzlager (1) nach einem der Ansprüche 4 oder 5, **dadurch gekennzeichnet, dass** zwei stumpfwinklige Übergangskanten (33) oder Hohlkehlen zwischen je einer Flanke (8,9) des Bundes (11) und einem daran jeweils anschließenden, dem Spalt (4) zugewandten Oberflächenbereich (12,13) des betreffenden Anschlusselements (2,3) in axialer Richtung des Wälzlagers (1) übereinander liegen.

7. Wälzlager (1) nach einem der Ansprüche 4 bis 6, **dadurch gekennzeichnet, dass** das den Bund (11) in einer rundum laufenden Nut (17) aufnehmende Anschlusselement (2,3) ebenfalls zwei stumpfwinklige Übergangskanten (33) nach Art von stumpfwinkligen Hohlkehlen aufweist, jeweils zwischen einer Flanke (14,15) der Nut (17) und dem Nutgrund (16) des betreffenden Anschlusselements (2,3), welche in axialer Richtung des Wälzlagers (1) übereinander liegen.

8. Wälzlager (1) nach einem der Ansprüche 6 oder 7, **dadurch gekennzeichnet, dass** im Lagerquerschnitt der Öffnungswinkel $\alpha$ einer stumpfwinkligen Übergangskante (33) oder einer stumpfwinkligen Hohlkehle größer ist als 90°, vorzugsweise größer als 105°, insbesondere größer als 120°, und/oder kleiner als 165°, vorzugsweise kleiner als 150°, insbesondere kleiner als 135°.

9. Wälzlager (1) nach einem der Ansprüche 6 bis 8, **dadurch gekennzeichnet, dass** im Lagerquerschnitt die Verbindungslinie (V) zwischen den beiden, einer gemeinsamen Wälzkörperreihe (5,6) zugeordneten, stumpfwinkligen Übergangskanten (33) oder stumpfwinkligen Hohlkehlen durch den Mittelpunkt des betreffenden Wälzkörpers (1) hindurch läuft, und/oder dass im Lagerquerschnitt die Verbindungslinie (V) zwischen den beiden, einer gemeinsamen Wälzkörperreihe (5,6) zugeordneten, stumpfwinkligen Übergangskanten (33) oder stumpfwinkligen Hohlkehlen den Öffnungswinkel $\alpha$ einer stumpfwinkligen Übergangskante oder einer stumpfwinkligen Hohlkehle in zwei Winkel $\delta$, $\varepsilon$ teilt, von denen einer 90° beträgt, der andere dagegen nicht:

$$\alpha = \delta + \varepsilon, \text{ wobei } \delta = 90°, \varepsilon \neq 90°.$$

10. Wälzlager (1) nach einem der vorhergehenden Ansprüche, **dadurch gekennzeichnet, dass** sich bei einem Wälzkörper (5,6) an den Mantelflächenbereich (21) mit konstantem Längswölbungsradius $r_d = r_{max}$ jeweils eine Stirnfläche (22,23) anschließt, ggf. nach einem Übergangsbereich, wobei vorzugsweise ein oder beide Übergangsbereiche zwischen der Mantelfäche (21) und einer oder beiden Stirnflächen (22,23) in Längsrichtung des betreffenden Wälzkörpers (5,6) kontinuierlich gewölbt sind mit einem Übergangs-Längswölbungsradius $r_{dü}$, der kleiner ist als der Längswölbungsradius $r_d$ im Bereich der Mantelfläche (21):

$$r_{dü} < r_d.$$

11. Wälzlager (1) nach Anspruch 10, **dadurch gekennzeichnet, dass** eine oder beide Stirnflächen (22,23) eben oder doppelt konvex oder doppelt konkav gewölbt sind.

12. Wälzlager (1) nach Anspruch 11, **dadurch gekennzeichnet, dass** der radiale Wölbungsradius $r_r$ einer oder beider Stirnflächen (22,23) betragsmäßig oder absolut größer ist als der Längswölbungsradius $r_d$ im Bereich der Mantelfäche (21) des betreffenden Wälzkörpers (5,6):

$$|r_r| > r_d,$$

oder

$$r_r > r_d,$$

und/oder dass der radiale Wölbungsradius $r_r$ einer oder beider Stirnflächen (22,23) betragsmäßig oder absolut größer ist als der Längswölbungsradius $r_{dü}$ in dem betreffenden Übergangsbereich zwischen der Mantelfäche (21) und der betreffenden Stirnfläche (22,23):

$$|r_r| > r_{dü},$$

oder

$$r_r > r_{dü}.$$

13. Wälzlager (1) nach einem der vorhergehenden Ansprüche, **dadurch gekennzeichnet, dass** an einem oder beiden Anschlusselementen (2,3) eine Führungsfläche vorgesehen ist, um die Rotationssymmetrieachsen (z) der Wälzkörper (5,6) stets radial in Bezug auf die Hauptdrehachse (h) des Wälzlagers (1) auszurichten.

**14.** Wälzlager (1) nach Anspruch 13, **dadurch gekennzeichnet, dass** die Führungsflächen einander zugewandt sind, und/oder dass die Führungsflächen zumindest bereichsweise zylindrisch oder hohlzylindrisch oder eben sind.

**15.** Wälzlager (1) nach einem der vorhergehenden Ansprüche, **dadurch gekennzeichnet, dass** zur Übertragung von Radialkräften, also von Kräften radial zur Hauptdrehachse (h) des Wälzlagers (1), ein zusätzliches Radiallager vorgesehen ist, vorzugsweise wenigstens eine Reihe von zusätzlichen Wälzkörpern (7), welche zwischen einander in axialer Richtung überlappenden Laufbahnen (36,37) abrollen, insbesondere wenigstens eine Reihe von rollen- oder nadelförmig ausgebildeten Wälzkörpern (7).

**16.** Wälzlager (1) nach einem der vorhergehenden Ansprüche, **dadurch gekennzeichnet, dass** insgesamt drei Anschlusselemente vorgesehen sind, nämlich ein radial inneres mit dem kleinsten Radius, ein radial äußeres mit dem größten Radius und dazwischen ein radial mittleres mit einem mittleren Radius, wobei vorzugsweise das innere und das äußere der drei Anschlusselemente im Bereich einer Stirnseite des mittleren Anschlusselements aneinander grenzen oder miteinander verbunden sind.

**17.** Wälzlager (1) nach Anspruch 16, **dadurch gekennzeichnet, dass** in dem Spalt zwischen dem inneren und dem mittleren Anschlusselement ein oder vorzugsweise zwei Reihen von Wälzkörpern mit doppelt konvex gewölbter Mantelfläche entlang von dortigen Laufbahnen in einander in radialer Richtung überlappenden Bereichen der betreffenden Anschlusselemente angeordnet sind, und/oder dass zwischen dem mittleren und dem äußeren Anschlusselement ein oder vorzugsweise zwei Reihen von Wälzkörpern mit doppelt konvex gewölbter Mantelfläche entlang von dortigen Laufbahnen in einander in radialer Richtung überlappenden Bereichen der betreffenden Anschlusselemente angeordnet sind.

**Claims**

**1.** A rolling bearing (1) with at least two annular connecting elements (2, 3), which are concentric to a main rotational axis (h) of the bearing (1) and spaced apart from one another by a gap (4), for connection to a first machine part or plant part on the one hand, and to a second machine part or facility part or chassis or fundament on the other hand, wherein the two connecting elements (2,3) overlap each other in the region of the gap (4) in radial direction with respect to the main rotational axis (h) of the rolling bearing (1) as a result of a connecting element (2,3) being provided with a circumferential groove (17) at its area facing the gap (4), into which another collar (11) integrated with another connecting element (3,2) engages by forming the gap (4), and wherein at least one raceway (28-31) is arranged in areas of the gap (4) overlapping each other radially on each of the two connecting elements (2, 3), along which one or more rows of rolling elements (5,6) are rolling,

   a) the surfaces of which are exclusively rotationally symmetrical with respect to one single, distinguished axis (z) of rotational symmetry of the respective rolling element (5,6), which is oriented radially with respect to the main rotational axis (h) of the rolling bearing (1),

   and wherein said rolling elements (5,6)

   b) have a length (l) in the direction of their axis (z) of rotational symmetry, as well as
   c) a maximum radius ($r_{max}$) radial to their axis (z) of rotational symmetry, and further
   d) a lateral surface (21) double convexly curved with a transverse radius of curvature ($r_q$) in a direction tangential to the axis (z) of rotational symmetry, which corresponds to the respective distance ($r_R$) of the lateral surface (21) to the axis (z) of rotational symmetry in the respective point of the lateral surface (21) of the respective rolling element (5,6) and at best is equal to the maximum radius ($r_{max}$) of the rolling element (5,6) along an equator line (Ä) of the regarding rolling element (5,6), but otherwise smaller:

$$r_q \leqq r_{max}$$

   **characterized in that**

   e) the convexly curved lateral surface (21) of said rolling element (5,6) is provided with a radius ($r_d$) of longitudinal curvature in a direction parallel to the axis (z) of rotational symmetry of the respective rolling body (5,6), which is constant on the entire lateral surface (21) and is equal to or smaller than the maximum radius ($r_{max}$) of the

rolling element (5,6):

$$r_q \leq r_{max}$$

f) wherein half the length (I) of the rolling element (5,6) is smaller than the maximum radius ($r_{max}$) of the rolling element (5,6):

$$\tfrac{1}{2}\, l_R < r_{max}$$

g) and wherein the collar (11) on its basis transitions via an obtuse-angled edge like a bevelled fillet into a subsequent area (12,13) of the surface of the relevant connecting element (2,3) facing the the gap (4)

2. A rolling bearing according to claim 1, **characterized in that** the rolling elements (5,6) are predominantly or exclusively transferring axial forces, i.e. forces in the direction of the main rotational axis (h) of the rolling bearing (1), and/or tilting moments, and/or **in that** the relevant rolling elements (5,6) have a support angle of more than 45°, preferably a support angle of 60° or more, in particular a support angle of 75° or more, ideally a support angle of 90°.

3. A rolling bearing according to one of claims 1 or 2, **characterized in that** two rows of rolling elements (5,6) with double convexly curved lateral surfaces (21) are arranged one above the other in the direction of the main rotational axis (h) of the rolling bearing (1), hereby the areas of the curved lateral surfaces (21) facing each other are rolling on raceways (28-31) which are arranged on the same connecting element (2,3), while the areas of the curved lateral surfaces (21) averted from each other are rolling on raceways (28-31) which are arranged on the other connecting element (3,2).

4. A rolling bearing (1) as claimed in one of the preceding claims, **characterized in that** the radial extent of the collar (11) is equal to or greater than the radial extent of a said rolling element (5,6) rolling along it, wherein the radial extent is in each case related to the main rotational axis (h) of the rolling bearing (1)

5. A rolling bearing (1) according one of claims 4, **characterized in that** the flanks (8,9) of the collar (11) follow a concavely curved course in the radial direction relative to the main rotational axis (h) of the rolling bearing (1).

6. A rolling bearing (1) according to one of claims 4 or 5. **characterized in that** two obtuse-angled transitional edges (33) or bevelled fillets between one flank (8,9) of the collar (11) and a surface region (12,13) connected thereto and adjoining the gap (4) of the respective connecting element (2, 3) lie one above the other in the axial direction of the rolling bearing (1).

7. A rolling bearing (1) according to one of claims 4 to 6, **characterized in that** the connecting element (2,3) receiving the collar (11) in a circumferential groove (17) has also two obtuse-angled transitional edges (33) in the form of bevelled fillets, between one flank (14,15) of the groove (17) and the groove base (16) of the respective connecting element (2,3), which lie one above the other in the axial direction of the rolling bearing (1).

8. A rolling bearing (1) according to claim 6 or 7, **characterized in that**, in the cross section of the bearing, the opening angle $\alpha$ of an obtuse-angled transitional edge (33) or of a bevelled fillet is greater than 90°, preferably greater than 105°, in particular greater than 120°, and/or less than 165°, preferably less than 150°, in particular less than 135°.

9. A rolling bearing (1) according to one of claims 6 to 8, **characterized in that**, in the cross section of the bearing, the connecting line (V) between the two obtuse-angled transitional edges (33) or bevelled fillets allocated to a common row of rolling elements (5,6) is running through the center of the respective rolling body (1), and/or **in that**, in the cross section of the bearing, the connecting line (V) between the two obtuse-angled transitional edges (33) or bevelled fillets allocated to a common row of rolling elements (5,6) is dividing the opening angle $\alpha$ of an obtuse-angled transitional edge or of a bevelled fillet into two angles $\delta$, $\varepsilon$, of which one is 90°, the other is not:

$$\alpha = \delta + \varepsilon, \text{ where } \delta = 90°, \varepsilon \neq 90°.$$

10. A rolling bearing (1) according to one of the preceding claims, **characterized in that**, at a rolling element (5,6), a respective end face (22,23) is adjoining the curved lateral surface region (21) of constant longitudinal curvature radius $r_d = r_{max}$, if applicable behind a transitional area, in which preferably one or both transitional areas between the curved lateral surface (21) and one or two end faces (22,23) are continuously curved in the longitudinal direction of the respective rolling element (5,6), with a transitional longitudinal curvature radius $r_{d\ddot{u}}$ which is smaller than the longitudinal curvature radius $r_d$ in the region of the curved lateral surface (21):

$$r_{d\ddot{u}} < r_d.$$

**11.** A rolling bearing (1) according to claim 10, **characterized in that** one or both end faces (22, 23) are planar or double-convex or double-concave.

**12.** A rolling bearing (1) according to claim 11, **characterized in that** the radial radius of curvature $r_r$ of one or both end faces (22,23) is according to its modulus or absolutely greater than the longitudinal curvature radius $r_d$ in the region of the curved lateral surface (21) of the respective rolling body (5,6):

$$|r_r| > r_d,$$

and/or **in that** the radial curvature radius of one or both end faces (22,23) is according to its modulus or absolutely greater than the longitudinal curvature radius $r_{d\ddot{u}}$ in the respective transitional region between the lateral curved surface (21) and the respective end face (22,23):

$$|r_r| > r_{d\ddot{u}},$$

**13.** A rolling bearing (1) according to one of the preceding claims, **characterized in that** a guide surface is provided on one or both connecting elements (2,3) in order to align the axes (z) of rotational symmetry of the rolling elements (5,6) always radially with respect to the main rotational axis (h) of the rolling bearing (1).

**14.** A rolling bearing (1) according to claim 13, **characterized in that** the guide surfaces are facing one another, and/or **in that** the guide surfaces are cylindrical or hollow-cylindrical or planar at least in some regions.

**15.** A rolling bearing according to one of the preceding claims, **characterized in that** an additional radial bearing is provided for the transmission of radial forces, that is, forces radially to the main rotational axis (h) of the rolling bearing (1), preferably at least one row of further rolling elements (7), which are rolling between raceways (36,37), which overlap one another in axial direction, in particular at least one row of rolling elements (7) designed in the shape of a roller or needle.

**16.** A rolling bearing (1) according to one of the preceding claims, **characterized in that** a total of three connecting elements are provided, namely a radially inner one with the smallest radius, a radially outer one with the greatest radius, and a radially middle one with an intermediate radius, wherein preferably the inner and the outer ones of the three connecting elements are adjoining each other or are connected to one another in the region of an end face of the middle connecting element.

**17.** A rolling bearing (1) according to claim 16, **characterized in that**, in the gap between the inner and the middle connecting element, one or preferably two rows of rolling elements with a double convexly curved lateral surface are arranged along respective raceways in regions of the respective connecting elements overlapping one another in the radial direction, and/or **in that**, between the middle and the outer connecting element, one or preferably two rows of rolling elements with a double convexly curved lateral surface are arranged along respective raceways in regions of the respective connecting elements overlapping one another in the radial direction.

**Revendications**

**1.** Palier à roulement (1) comportant au moins deux éléments de raccordement annulaires (2, 3), concentriques par rapport à un axe de rotation principal (h) du palier (1), espacés les uns des autres par une fente (4) destinés au raccordement à une première partie de machine ou d'installation d'une part et à une deuxième partie de machine ou d'installation ou à un châssis ou bâti d'autre part, en ce que les deux éléments de raccordement (2, 3) se chevauchent radialement dans la zone de la fente (4) en sens radial par rapport à l'axe de rotation principal (h) du palier à roulement (1) et ainsi en ce qu'un élément de raccordement (2, 3) au niveau de sa surface tournée vers la fente (4) est muni d'une rainure périphérique (17), dans laquelle un épaulement (11) formé sur l'autre élément de raccordement (3, 2) vient en prise à réalisation de la fente (4), et en ce que dans des zones de la fente (4) se chevauchant radialement respectivement au moins un chemin de roulement (28-31) est disposé sur chacun des deux éléments de raccordement (2, 3), où une ou plusieurs rangées de corps de roulement (5, 6) roulent,

a) dont les surfaces sont respectivement exclusivement symétriques en rotation par rapport à un seul et unique axe de symétrie de rotation marqué (z) du corps de roulement (5, 6) en question, qui est orienté radialement par rapport à l'axe de rotation principal (h) du palier à roulement (1),

et en ce que lesdits corps de roulement (5, 6)

b) présentent en direction de leur axe de symétrie de rotation (z) une longueur (l), ainsi que
c) radialement par rapport à leur axe de symétrie de rotation (z) un rayon maximal ($r_{max}$), ainsi qu'en outre
d) une surface d'enveloppe (21) doublement courbée de manière convexe présentant un rayon de courbure transversale ($r_q$) dans un sens tangentiel par rapport à l'axe de symétrie de rotation (z), qui correspond à l'espace respectif ($r_R$) de la surface d'enveloppe (21) par rapport à l'axe de symétrie de rotation (z) au point correspondant de la surface d'enveloppe (21) du corps de roulement (5, 6) en question et au mieux le long d'une ligne équatoriale (Ä) du corps de roulement en question (5, 6) est égal au rayon maximal ($r_{max}$) du corps de roulement (5, 6), sinon toutefois inférieur :

$$r_q < r_{max}$$

**caractérisé en ce que**

e) la surface d'enveloppe (21) courbée de manière convexe desdits corps de roulement (5, 6) présente un rayon de courbure longitudinal ($r_d$) dans un sens parallèle à l'axe de symétrie de rotation (z) du corps de roulement en question (5, 6), qui est constant sur l'ensemble de la surface d'enveloppe (21) et égal ou inférieur au rayon maximal ($r_{max}$) du corps de roulement (5, 6) :

$$r_d < r_{max}$$

f) **en ce que** la demi-longueur (l) du corps de roulement (5, 6) est inférieure au rayon maximal ($r_{max}$) du corps de roulement (5, 6) :

$$\tfrac{1}{2}\, l_R < r_{max}$$

g) et **en ce que** l'épaulement (11) à sa base se transforme au-dessus d'un bord à angle obtus de type gorge à angle obtus en une zone superficielle (12, 13) adjacente, tournée vers la fente (4) de l'élément de raccordement (2, 3) en question.

2. Palier à roulement (1) selon la revendication 1, **caractérisé en ce que** lesdits corps de roulement (5, 6) transmettent essentiellement ou exclusivement des forces axiales, donc des forces dans le sens de l'axe de rotation principal (h) du palier roulement (1), et/ou des couples de renversement, et/ou **en ce que** lesdits corps de roulement (5, 6) présentent une équerre de plus de 45°, de préférence une équerre de 60° ou plus, en particulier une équerre de 75° ou plus, idéalement une équerre de 90°.

3. Palier à roulement (1) selon l'une des revendications 1 ou 2, **caractérisé en ce que** deux rangées de corps de roulement (5, 6) ayant des surfaces d'enveloppe (21) doublement courbées de manière convexe dans le sens de l'axe de rotation principal (h) du palier à roulement (1) sont superposées, **en ce que** les zones tournées l'une vers l'autre des surfaces d'enveloppe (21) roulent sur des chemins de roulement (28-31) qui sont disposés sur le même élément de raccordement (2, 3) pendant que les zones opposées l'une à l'autre des surfaces d'enveloppe (21) roulent sur des chemins de roulement (28-31) qui sont disposés sur l'autre élément de raccordement (3, 2).

4. Palier à roulement (1) selon l'une des revendications précédentes, **caractérisé en ce que** l'extension radiale de l'épaulement (11) est égale ou supérieure à l'extension radiale d'undit corps de roulement (5, 6) y roulant le long, **en ce que** l'extension radiale se rapporte respectivement à l'axe de rotation principal (h) du palier à roulement (1).

5. Palier à roulement (1) selon l'une des revendications 4, **caractérisé en ce que** les flancs (8, 9) de l'épaulement (11) en sens radial, par rapport à l'axe de rotation principal (h) du palier à roulement (1), suivent un tracé courbé de manière concave.

6. Palier à roulement (1) selon l'une des revendications 4 ou 5, **caractérisé en ce que** les deux bords de transition (33) à angle obtus ou gorges entre respectivement un flanc (8, 9) de l'épaulement (11) et une zone superficielle (12, 13) respectivement adjacente, tournée vers la fente (4), de l'élément de raccordement (2, 3) en question sont superposés dans le sens axial du palier à roulement (1).

7. Palier à roulement (1) selon l'une des revendications 4 à 6, **caractérisé en ce que** l'élément de raccordement (2, 3) recevant l'épaulement (11) dans une rainure périphérique (17) présente également deux bords de transition (33) à angle obtus de type gorges à angle obtus, respectivement entre un flanc (14, 15) de la rainure (17) et la base de rainure (16) de l'élément de raccordement (2, 3) en question qui sont superposés dans le sens axial du palier à roulement (1).

8. Palier à roulement (1) selon l'une des revendications 6 ou 7, caractérisé en ce dans la section transversale de palier l'angle d'ouverture $\alpha$ d'un bord de transition (33) à angle obtus ou une gorge à angle obtus est supérieur à 90°, de préférence supérieur à 105°, en particulier supérieur à 120°, et/ou inférieur à 165°, de préférence inférieur à 150°, en particulier inférieur à 135°.

9. Palier à roulement (1) selon l'une des revendications 6 à 8, **caractérisé en ce que** dans la section transversale la ligne de jonction (V) entre les deux bords de transition (33) à angle obtus ou gorges à angle obtus, correspondant à une rangée de corps de roulement (5, 6) commune, passe par le centre du corps de roulement (1) en question, et/ou **en ce que** dans la section transversale la ligne de jonction (V) entre les deux bords de transition (33) à angle obtus ou gorges à angle obtus correspondant à une rangée de corps de roulement (5, 6) commune divise l'angle d'ouverture $\alpha$ d'un bord de transition à angle obtus ou d'une gorge à angle obtus en deux angles $\delta$, $\varepsilon$, dont l'un est de 90°, l'autre par contre non :

$$\alpha = \delta + \varepsilon, \text{ soit } \delta = 90°, \varepsilon \neq 90°.$$

10. Palier à roulement (1) selon l'une des revendications précédentes, **caractérisé en ce que** pour un corps de roulement (5, 6) respectivement une face frontale (22, 23) se raccorde à la zone de surface d'enveloppe (21) d'un rayon de courbure longitudinal constant $r_d = r_{max}$, le cas échéant, en aval d'une zone de transition, **en ce que** de préférence une ou deux zones de transition entre la surface d'enveloppe (21) et une ou les deux faces frontales (22, 23) sont courbées en continu dans le sens longitudinal du corps de roulement (5, 6) en question en présentant un rayon de courbure longitudinal de transition $r_{d\ddot{u}}$ qui est inférieur au rayon de courbure longitudinal $r_d$ dans la zone de la surface d'enveloppe (21) :

$$r_{d\ddot{u}} < r_d.$$

11. Palier à roulement (1) selon la revendication 10, **caractérisé en ce qu'**une ou les deux faces frontales (22, 23) sont courbées de manière plane ou doublement convexe ou doublement concave.

12. Palier à roulement (1) selon la revendication 11, **caractérisé en ce que** le rayon de courbure radial $r_r$ de l'une ou des deux faces frontales (22, 23) est en valeur ou absolu supérieur au rayon de courbure longitudinal $r_d$ dans la zone de la surface d'enveloppe (21) du corps de roulement (5, 6) en question :

$$|r_r| > r_d$$

ou

$$r_r > r_d$$

et/ou **en ce que** le rayon de courbure radial $r_r$ de l'une ou des deux faces frontales (22, 23) est en valeur ou absolu supérieur au rayon de courbure longitudinal $r_{d\ddot{u}}$ dans la zone de transition en question entre la surface d'enveloppe (21) et la face frontale (22, 23) en question :

$$|r_r| > r_{d\ddot{u}}$$

ou

$$r_r > r_{d\ddot{u}}.$$

**13.** Palier à raclement (1) selon l'une des revendications précédentes, **caractérisé en ce qu'**une surface de guidage est prévue sur l'un ou les deux éléments de raccordement (2, 3) pour aligner les axes de symétrie de rotation (z) des corps de roulement (5, 6) toujours radialement par rapport à l'axe de rotation principal (h) du palier à roulement (1).

**14.** Palier à roulement (1) selon la revendication 13, **caractérisé en ce que** les surfaces de guidage sont tournées l'une vers l'autre, et/ou **en ce que** les surfaces de guidage au moins par zones sont cylindriques ou ayant une forme cylindrique creuse ou bien planes.

**15.** Palier à roulement (1) selon l'une des revendications précédentes, **caractérisé en ce que** pour la transmission de forces radiales, donc de forces radiales par rapport à l'axe de rotation principal (h) du palier à roulement (1), un palier radial additionnel est prévu, de préférence au moins une rangée de corps de roulement additionnels (7) qui roulent dans le sens axial des chemins de roulement se chevauchant (36, 37), en particulier au moins une rangée de corps de roulement (7) réalisés sous la forme de rouleaux ou d'aiguilles.

**16.** Palier à roulement (1) selon l'une des revendications précédentes, **caractérisé en ce qu'**au total trois éléments de raccordement sont prévus, à savoir un radialement intérieur de plus petit rayon, un radialement extérieur de plus grand rayon et entre un radialement central de moyen rayon, **en ce que** de préférence l'intérieur et l'extérieur des trois éléments de raccordement dans la zone d'une face frontale de l'élément de raccordement moyen sont contigus ou reliés l'un à l'autre.

**17.** Palier à roulement (1) selon la revendication 16, **caractérisé en ce que**, dans la fente entre l'élément de raccordement intérieur et l'élément de raccordement central, une ou de préférence deux rangées de corps de roulement ayant une surface d'enveloppe doublement courbée de manière convexe le long des chemins de roulement s'y trouvant sont disposées dans des zones des éléments de raccordement en question se chevauchant dans le sens radial, et/ou **en ce que**, entre l'élément de raccordement central et l'élément de raccordement extérieur, une ou de préférence deux rangées de corps de roulement ayant une surface d'enveloppe doublement courbée de manière convexe le long des chemins de roulement s'y trouvant sont disposées dans des zones des éléments de raccordement en question se chevauchant dans le sens radial.

Fig.1

EP 2 944 836 B1

Fig.3

Fig.2

20

Fig.4a
Stand der Technik

Fig.4c

Fig.4b
Stand der Technik

$$r_d = r_K$$
$$\tfrac{1}{2} l_K = r_K$$

$$r_d \leqq r_R$$
$$\tfrac{1}{2} l_R < r_R$$

$$r_d > r_T$$
$$\tfrac{1}{2} l_T > r_T$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010040539 A1
- DE 102007049982 A1